# EUROPÄISCHE PATENTSCHRIFT

(11) **EP 3 722 769 B1**
(45) Veröffentlichungstag und Bekanntmachung des Hinweises auf die Patenterteilung: **14.05.2025**
(21) Anmeldenummer: 20166929.8
(22) Anmeldetag: 31.03.2020
(51) Int. Cl.: G01L 9/00

(54) **ELEKTRONISCHES MODUL UND VERFAHREN ZU DESSEN HERSTELLUNG**
ELECTRONIC MODULE AND METHOD FOR ITS MANUFACTURE
MODULE ÉLECTRONIQUE ET SON PROCÉDÉ DE FABRICATION

(30) Priorität: 10.04.2019 DE 102019205149
(43) Veröffentlichungstag der Anmeldung: 14.10.2020
(73) Patentinhaber: Robert Bosch GmbH, 70442 Stuttgart (DE)
(72) Erfinder: Kugler, Andreas, 73553 Alfdorf (DE)

(56) Entgegenhaltungen:
- WO-A1-2018/235087
- WO-A2-2005/058133
- CN-A- 105 404 881
- CN-A- 106 370 325
- DE-A1- 102007 011 472
- US-B1- 7 426 873

## Beschreibung

### Technisches Gebiet

Die Erfindung betrifft ein elektronisches Modul, wie es beispielhaft, aber nicht einschränkend, in einem Fahrzeug als Bestandteil eines Fahrerassistenzsystems dienen kann. Ferner betrifft die Erfindung ein Verfahren zur Herstellung eines erfindungsgemäßen elektronischen Moduls.

### Stand der Technik

Aus der DE 10 2009 001 932 A1 der Anmelderin ist ein elektronisches Modul in Form eines Chip-Moduls mit den Merkmalen des Oberbegriffs des Anspruchs 1 bekannt, das sich im Wesentlichen durch eine Trägerfolie auszeichnet, auf der elektrisch leitfähige Strukturen ausgebildet sind. Mit der Trägerfolie sind Chips verbunden, die u.a. als Drucksensor ausgebildet sein können. Die Trägerfolie ist auf der den Chips zugewandten Seite (vollständig) von einer Schutzmasse in Form einer Moldmasse überdeckt. Die bekannten, als Drucksensoren wirkenden Chips stellen von den Drucksensoren separate Baueinheiten dar, wobei keine Einzelheiten bezüglich des genauen Aufbaus der Drucksensoren offenbart sind.

Aus der DE 10 2007 011 472 A1 ist es darüber hinaus bekannt, einen Drucksensor mit einer elastisch deformierbaren Membran auszubilden, die an ihrer Unter- und Oberseite mittels jeweils eines ringförmigen Gehäuseteils eingespannt ist, die fluchtend zueinander angeordnet sind. Ein im zentralen Bereich der Gehäuseteile angeordneter Einwirkbereich der Membran weist eine elektrisch leitende Struktur auf, deren elektrischer Widerstand sich in Abhängigkeit der Deformation des Einwirkbereichs ändert. Die Membran weist darüber hinaus außerhalb der Gehäuseteile Anschlusselemente zur Kontaktierung beispielsweise mit einer elektronischen Schaltung auf. Auch WO2018/235087A1 offenbart einen Drucksensor mit einer elastisch deformierbaren Membran sowie einer elektronischen Schaltung und einer Schutzmasse

### Offenbarung der Erfindung

Das erfindungsgemäße elektronische Modul mit den Merkmalen des Anspruchs 1 hat den Vorteil, dass es eine kostengünstige Integration und Herstellung von Sensoren, insbesondere von Drucksensoren auf einer Trägerfolie ermöglicht, wobei die Trägerfolie gleichzeitig Träger einer elektronischen Schaltung ist, die zumindest bereichsweise von einer Schutzmasse zum Schutz gegen äußere Einflüsse abgedeckt ist. Insbesondere ermöglicht es das elektronische Modul, auf als separate Baueinheiten ausgebildete Sensoren bzw. Drucksensoren verzichten zu können. Vielmehr bildet ein Teilbereich der Trägerfolie eine elastisch deformierbare Membran des Sensors bzw. Drucksensors bzw. einen Erfassungsbereich aus, und durch die zum Schutz gegenüber äußeren Einflüsse vorgesehene Schutzmasse oder einen Fixierkörper wird gleichzeitig auf besonders einfache Art und Weise eine Einspannung der Membran und somit eine geometrische Begrenzung bzw. eine Ausbildung des Erfassungsbereichs ermöglicht.

Vor diesem Hintergrund schlägt es die Lehre der Erfindung vor, dass der Sensor einen elastisch deformierbaren Erfassungsbereich aufweist, der durch einen Teilbereich der Trägerfolie und zusätzlich durch eine mit der Trägerfolie verbundene Detektionsfolie mit einer Mikrostrukturierung gebildet ist, wobei die Detektionsfolie aus Silizium besteht, um eine gegen mechanische Belastungen und Medien geschützte Kontaktierung der Detektionsfolie zu erzielen,
dass Mittel zur Erfassung der Deformation des Erfassungsbereichs vorgesehen sind, und dass die Schutzmasse oder ein Fixierkörper eine Aussparung aufweist, innerhalb der die Trägerfolie und die Detektionsfolie freigelegt ist, wobei die Aussparung den Erfassungsbereichs randseitig begrenzt, sodass die Schutzmasse oder der Fixierkörper den Erfassungsbereich gegenüber der Trägerfolie fixiert, wobei die Wand der Aussparung leicht schräg verläuft, sodass sich der Durchmesser der Aussparung mit wachsendem Abstand von der Trägerfolie vergrößert.

Vorteilhafte Weiterbildungen des erfindungsgemäßen elektronischen Moduls sind in den Unteransprüchen aufgeführt.

Um die Mittel zur Erfassung der Deformation des Erfassungsbereichs auszubilden, ist es vorgesehen, dass die Mittel durch die Detektionsfolie gebildet sind, insbesondere derart, dass sich ein elektrischer Widerstand der Detektionsfolie in Abhängigkeit der Deformation des Erfassungsbereichs ändert.

Um entweder die Empfindlichkeit bzw. Genauigkeit des Drucksensors zu erhöhen, oder aber um es zu ermöglichen, dass ein zu erfassender Druck auf beide Seiten der Membran einwirken kann bzw. gemessen werden kann, wird vorgeschlagen, dass die Trägerfolie auf der dem Erfassungsbereich gegenüberliegenden Seite einen mit dem Erfassungsbereich ausgerichteten zusätzlichen Erfassungsbereich aufweist, wobei die Größe des zusätzlichen Erfassungsbereichs maximal der Größe des Erfassungsbereichs entspricht.

In Weiterbildung des zuletzt gemachten Vorschlags ist es vorgesehen, dass die Seite der Trägerfolie, auf der sich der zusätzliche Erfassungsbereich befindet, frei von Schutzmasse. Dadurch wird eine vereinfachte Herstellung des elektronischen Moduls insofern ermöglicht, als dass die Schutzmasse, üblicherweise in Form einer Moldmasse, nur auf einer Seite der Trägerfolie aufgebracht werden muss.

Eine konstruktive Ausgestaltung zur vorteilhaften Kontaktierung der Detektionsfolie sieht vor, dass die Detektionsfolie mittels Drahtbondverbindungen mit der elektrisch leitfähigen Struktur der Trägerfolie elektrisch verbunden ist, und das der Bereich der Drahtbondverbindungen von der Schutzmasse überdeckt ist. Im Kontaktierungsbereich weist die Detektionsfolie eine dünne Siliziumschicht auf. Dadurch wird eine gegen mechanische Belastungen und Medien geschützte Kontaktierung der Detektionsfolie erzielt.

In einer weiteren vorteilhaften Ausgestaltung des elektronischen Moduls ist es vorgesehen, dass die Mittel zur Erfassung der Deformation des Erfassungsbereichs eine Auswerteelektronik umfasst, die von der Schutzmasse überdeckt ist.

Die Erfindung umfasst weiterhin ein Verfahren zur Herstellung eines soweit beschriebenen erfindungsgemäßen Moduls, wobei das Verfahren zumindest folgende Schritte umfasst:
Zunächst wird eine die elektrisch leitfähige Struktur aufweisende Trägerfolie bereitgestellt. Anschließend erfolgt eine Verbindung einer eine Deformation erfassenden Detektionsfolie mit der Trägerfolie. Anschließend erfolgt ein zumindest teilweises Ausbilden einer elektronischen Schaltung durch Bestücken der elektrisch leitfähigen Strukturen mit elektronischen Bauelementen. In einem unmittelbar daran anschließenden oder einem späteren Schritt erfolgt ein teilweises Überdecken der Trägerfolie mit einer Schutzmasse oder einem Fixierkörper unter Freilassung des Erfassungsbereichs. Zuletzt erfolgt ggf. eine Bestückung weiterer elektronischer Bauteile in Bereichen der Trägerfolie, in denen keine Schutzmasse angeordnet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Kurze Beschreibung der Zeichnungen
- Fig. 1: zeigt ein nicht erfindungsgemäßes elektronisches Modul in einem Längsschnitt, bei dem eine Trägerfolie zur Ausbildung eines Drucksensors bereichsweise strukturiert ausgebildet ist,
- Fig. 2: ein gegenüber Fig. 1 modifiziertes erfindungsgemäßes elektronisches Modul unter Verwendung einer mit der Trägerfolie verbundenen Detektionsfolie als Bestandteil eines Drucksensors,
- Fig. 3: eine vereinfachte Darstellung eines Werkzeugs zur Herstellung eines elektronischen Moduls in einem Längsschnitt und
- Fig. 4: ein Ablaufdiagramm zur Verdeutlichung der wesentlichen Schritte zur Herstellung der elektrischen Module gemäß der Fig. 1 und Fig. 2.

### Ausführungsformen der Erfindung

Gleiche Elemente bzw. Elemente mit gleicher Funktion sind in den Figuren mit den gleichen Bezugsziffern versehen.

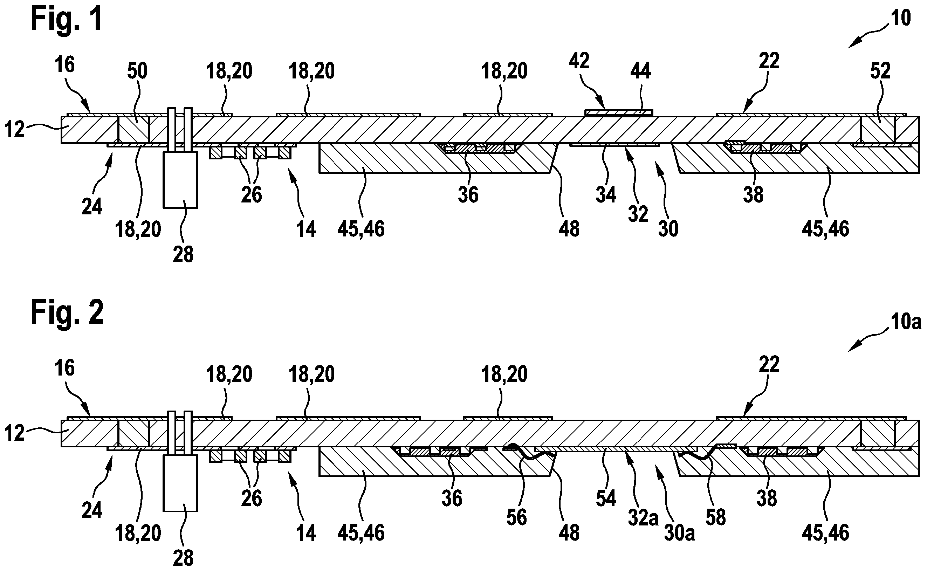

In der Fig. 1 ist ein nicht erfindungsgemäßes elektronisches Modul 10 dargestellt, wie es beispielsweise als Bestandteil eines Assistenzsystems oder einer Sicherheitseinrichtung in einem Kraftfahrzeug dienen kann. Beispielsweise kann das Modul 10 als Bestandteil eines Airbag-Auslösesystems ausgebildet sein.

Das Modul 10 weist eine Trägerfolie 12, bestehend aus einem Polymer auf, wobei die Dicke der Trägerfolie 12 beispielsweise zwischen 2 µm und 100 µm, vorzugsweise zwischen 5 µm und 50 µm, beträgt. Die Trägerfolie 12 dient als Bestandteil bzw. Träger einer elektronischen Schaltung 14. Die elektronische Schaltung 14 umfasst beispielhaft an einer Oberseite 16 der Trägerfolie 12 ausgebildete elektrisch leitfähige Strukturen 18 in Form von Leiterbahnen 20. Weiterhin umfasst die elektronische Schaltung 14 an der Oberseite 16 beispielhaft ein Antennen-Array 22. An der Unterseite 24 der Trägerfolie 12 sind beispielhaft elektronische Bauteile, insbesondere SMD-Bauteile 26 sowie ein Stecker 28 zur elektrischen Kontaktierung des Moduls 10 angeordnet. Die angesprochenen Bauteile sind ebenfalls Bestandteil der elektronischen Schaltung 14, wozu an der Unterseite 24 die Trägerfolie 12 ebenfalls elektrisch leitfähige Strukturen 18 bzw. Leiterbahnen 20 aufweist.

Zusätzlich weist das Modul 10 einen Sensor in Form eines Drucksensors 30 auf, der dazu dient, eine (elastische) Deformation der Trägerfolie 12 im Bereich des Drucksensors 30 bzw. eines Erfassungsbereichs 32 des Drucksensors 30 zu detektieren. Der insbesondere kreisförmig ausgebildete Erfassungsbereich 32 zeichnet sich dadurch aus, dass in dessen Bereich an der Unterseite 24 der Trägerfolie 12 eine Struktur 34 vorgesehen bzw. ausgebildet ist, deren elektrischer Widerstand sich bei einer Deformation des Erfassungsbereichs 32 ändert. Die Struktur 34 kann beispielsweise in Form einer Widerstandsstruktur bzw. einer Wheatstone'schen Brücke ausgebildet sein. Zur Auswertung bzw. Erfassung der Detektion des Erfassungsbereichs 32 ist die Struktur 34 beispielhaft mit Auswerte-ICs 36, 38 verbunden. Dies erfolgt entweder dadurch, dass die Struktur 34 entweder über Leiterbahnen 20, oder durch separate Elemente, beispielsweise Drahtbondverbindungen o.ä. (nicht dargestellt) mit den Auswerte-ICs 36, 38 verbunden ist.

Alternativ oder zusätzlich zu der an der Unterseite 24 der Trägerfolie 12 vorgesehenen Struktur 34 kann es vorgesehen sein, dass ebenfalls auf der Oberseite 16 der Trägerfolie 12 ein zusätzlicher Erfassungsbereich 42 mit einer zusätzlichen Struktur 44 vorgesehen bzw. ausgebildet ist. In dem Fall, bei dem sowohl an der Unterseite 24 als auch der Oberseite 16 entsprechende Erfassungsbereiche 32, 42 bzw. Strukturen 34, 44 vorgesehen sind (wie dies in der Fig. 1 dargestellt ist), sind die entsprechenden Erfassungsbereiche 32, 42 vorzugsweise in gegenseitiger Überdeckung bzw. zueinander ausgerichtet angeordnet, wobei der zusätzliche Erfassungsbereich 42 vorzugsweise maximal die Größe des Erfassungsbereichs 32 aufweist.

Wesentlich für die Gewährleistung der Funktion des Erfassungsbereichs 32, 42 bzgl. einer elastischen Deformation bzw. der richtigen Erfassung der Deformation der Trägerfolie 12 ist es, dass der Erfassungsbereich 32, 42 hinsichtlich seiner Größe genau definiert bzw. randseitig eingespannt ist. Hierzu ist es bei dem Ausführungsbeispiel gemäß der Fig. 1 vorgesehen, dass an der Unterseite 24 der Trägerfolie 12 die Trägerfolie 12 bereichsweise von einer Schutzmasse 45 in Form einer Moldmasse 46 umgeben ist. Beispielhaft ist die MoDeteldmasse 46 im Bereich der Auswerte-ICs 36, 38 angeordnet bzw. überdeckt diese. Wesentlich ist, dass im Bereich des Erfassungsbereichs 32 bzw. 42 keine Moldmasse 46 vorgesehen ist. Hierzu bildet die Moldmasse 46 im Bereich der (unteren) Struktur 34 eine beispielhaft runde Aussparung 48 mit einer leicht schräg verlaufenden Wand aus. Innerhalb der Aussparung 48 ist der Erfassungsbereich 32 bzw. die Struktur 34 angeordnet. Dadurch, dass die Moldmasse 46 mit der Trägerfolie 12 im Bereich der Unterseite 24 verbunden ist, bildet die Moldmasse 46 eine umlaufende Einspannung für die Struktur 34 bzw. den Erfassungsbereich 32 aus. Ebenso findet auch eine Einspannung der Struktur 44 an der Oberseite 16 der Trägerfolie 12 statt, auch wenn in diesem Bereich, d.h. an der Oberseite 16, keine Moldmasse 46 vorgesehen ist. Hier genügt bereits die Verbindung der Moldmasse 46 an der Unterseite 24, um eine entsprechende Versteifung bzw. Einspannung der Struktur 44 an der Oberseite 16 der Trägerfolie 12 zu bewirken.

Zuletzt umfasst das Modul 10 auch Durchkontaktierungen 50, 52 als Bestandteil der elektronischen Schaltung 14, die die elektrisch leitfähigen Strukturen 18 an der Oberseite 16 mit denen an der Unterseite 24 elektrisch verbindet bzw. kontaktiert, wie dies aus dem Stand der Technik an sich bekannt ist.

In der Fig. 2 ist ein gegenüber der Fig. 1 erfindungsemäß modifiziertes Modul 10a dargestellt, das sich im Wesentlichen durch eine andere Ausgestaltung des Drucksensors 30a auszeichnet. Bei dem Drucksensor 30a ist es vorgesehen, dass die Trägerfolie 12 im Bereich des Drucksensors 30a an ihrer Oberfläche nicht gegenüber den anderen Bereichen bzw. mit der Struktur 34 modifiziert ist. Vielmehr ist im Erfassungsbereich 32a anstelle der Struktur 34 eine Detektionsfolie 54, bestehend aus Silizium mit einer Mikrostrukturierung, vorgesehen, die ebenfalls zur Erfassung der Deformation der Trägerfolie 12 im Erfassungsbereich 32a dient. Die vorzugsweise kreisförmig ausgebildete Detektionsfolie 54 ist ebenfalls vorzugsweise vollflächig durch aus dem Stand der Technik an sich bekannte Techniken mit der Trägerfolie 12 verbunden, sodass eine Deformation der Trägerfolie 12 unmittelbar auf die Detektionsfolie 54 übertragen wird. Weiterhin erkennt man in der Fig. 2 Drahtbondverbindungen 56, 58, über die die Detektionsfolie 54 mit der elektrischen Schaltung 14 bzw. den Auswerte-ICs 36, 38 verbunden ist. Allgemein sind Drahtbondverbindungen 56 dort sinnvoll bzw. erforderlich, wo die Detektionsfolie 54 aus Silizium besteht. Die Schutzmasse 45 bzw. Moldmasse 46 überdeckt die Drahtbondverbindungen 56, 58 zum Schutz gegen mechanische Belastung und Medien vollständig und bildet durch randseitige Überdeckung der Detektionsfolie 54 gleichzeitig die erforderliche Einspannung des Erfassungsbereichs 32a bzw. der Detektionsfolie 54 aus.

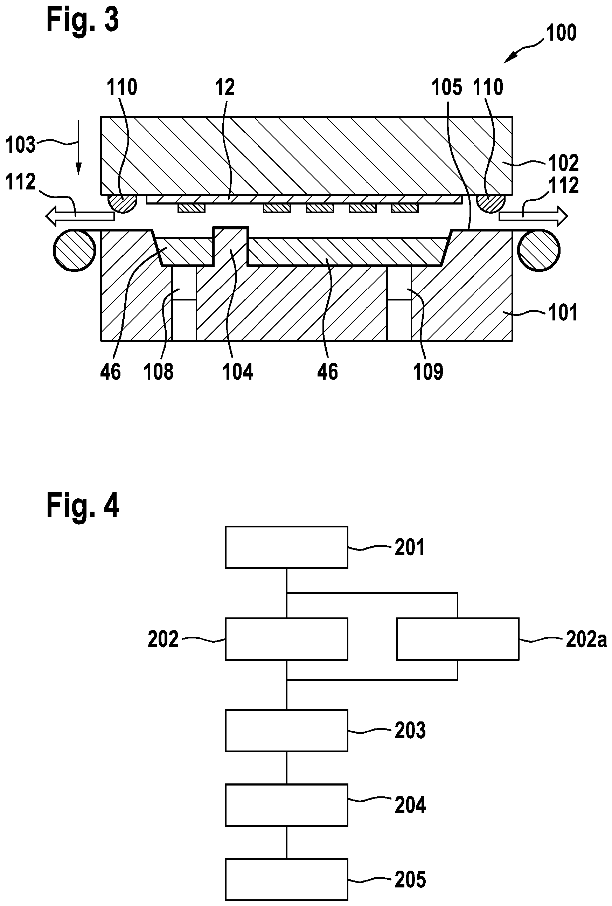

In der Fig. 3 ist stark vereinfacht ein Werkzeug 100 zur Herstellung des nicht erfindungsgemäßen Moduls 10 gemäß Figur 1 bzw. des erfindungsgemäßen Moduls 10a gemäß Figur 2 dargestellt. Das Werkzeug 100 umfasst ein Werkzeugunterteil 101 und ein Werkzeugoberteil 102, die zueinander beweglich angeordnet bzw. ausgebildet sind. Beispielsweise ist das Werkzeugunterteil 101 ortsfest angeordnet, und das Werkzeugoberteil 102 in Richtung des Pfeils 103 gegen das Werkzeugunterteil 101 verstellbar. Zur Herstellung des Moduls 10a, 10a ist die Trägerfolie 12 mit ihren elektrisch leitfähigen Strukturen 18 an der Oberseite 16 sowie der Unterseite 24 an dem Werkzeugoberteil 102 befestigt. Weiterhin sind auch ggf. bereits die Strukturen 28, 44 bzw. die Detektionsfolie 54 sowie zumindest teilweise die elektronischen Bauelemente, die von der Moldmasse 46 umgeben sein sollen, an der Trägerfolie 12 vormontiert. Im Bereich des Werkzeugunterteils 101 erkennt man einen Abdichtsteg 104, der in dem Bereich angeordnet ist, an dem keine Moldmasse 46 vorgesehen ist, d.h. insbesondere auch im Erfassungsbereich 32, 32a.

Die Oberseite des Werkzeugunterteils 101 ist von einer antihaftbeschichteten Folie 105 überdeckt. Im Bereich zweier Aufnahmeräume 106, 107 des Werkzeugunterteils 101, die von dem Abdichtsteg 104 voneinander getrennt sind, ist bereits Moldmasse 46 angeordnet. Am Grund des Werkzeugunterteils 101 sind darüber hinaus zwei Verdichtungszylinder 108, 109 vorgesehen, die in Richtung der Aufnahmen 106, 107 verstellbar sind, um eine Verdichtung der Moldmasse 46 bei geschlossenem Werkzeug 100 in den Aufnahmeräumen 106, 107 zu ermöglichen. Der Innenraum des Werkzeugs 100 ist darüber hinaus gegenüber der äußeren Umgebung mittels Dichtungen 110 abgedichtet und durch eine Vakuumquelle (nicht dargestellt) evakuierbar, was durch die Pfeile 112 dargestellt sein soll.

Zur Anordnung bzw. zum Aufbringen der Moldmasse 46 an der Trägerfolie 12 wird das Werkzeug 100 aus der in der Fig. 3 dargestellten Stellung in eine Stellung verbracht, bei der dieses geschlossen ist. Hierzu wird das Werkzeugoberteil 102 in Richtung des Werkzeugunterteils 101 bewegt. Dadurch gelangen die Bereiche der Trägerfolie 12 an der Unterseite 24 in Kontakt mit der Moldmasse 46, in denen die Moldmasse 46 angeordnet sein soll, und zwar spätestens, wenn die Verdichtungszylinder 108, 109 in Richtung der Aufnahmen 106, 107 bewegt werden, wobei dann zusätzlich eine Verdichtung der Moldmasse 46 stattfinden kann.

Nach dem Aushärten der zunächst verflüssigten bzw. warmen Moldmasse 46 wird das Werkzeugoberteil 102 wieder in eine angehobene Position bewegt, um das Modul 10, 10a aus dem Werkzeug 100 entnehmen zu können. Anschließend findet eine weitere Montage von elektronischen Bauteilen am Modul 10, 10a statt, beispielsweise die des Steckers 28 bzw. an den Stellen, an denen keine Moldmasse 46 vorgesehen ist.

Ergänzend wird erwähnt, dass es zur Einspannung der Trägerfolie 12 bzw. zur Definition des Erfassungsbereichs 32, 32a auch denkbar ist, anstatt einer Moldmasse 46 einen bereits vorgefertigten (ringförmigen) Körper zu verwenden, der mit der Trägerfolie 12 verbunden ist und den Erfassungsbereich 32, 32a randseitig fixiert bzw. einspannt (nicht dargestellt).

In der Fig. 4 sind in Form eines Ablaufdiagramms beispielhaft die wesentlichen Fertigungsschritte des Moduls 10, 10a dargestellt. Hierzu wird in einem ersten Schritt 201 die Trägerfolie 12 bereitgestellt, wobei die Trägerfolie 12 die elektrisch leitfähigen Strukturen 18 aufweist. Gegebenenfalls können auch elektronische Bauteile der elektronischen Schaltung 14 (insbesondere an der Seite der Trägerfolie 12, an der keine Moldmasse 46 vorgesehen ist) montiert sein. Anschließend erfolgt in einem zweiten, nicht erfindungsgemäßen Schritt 202 das Ausbilden der Struktur 34 im Erfassungsbereich 32 für den Fall, dass die Struktur 34 unmittelbar auf der Trägerfolie 12 ausgebildet ist. Alternativ kann anstelle des zweiten Schritts 202 ein erfindungsgemäßer zweiter Schritt 202a vorgesehen sein, bei dem die Detektionsfolie 54 im Erfassungsbereich 32a mit der Trägerfolie 12 durch geeignete Techniken verbunden wird.

Anschließend kann ggf. in einem dritten Schritt 203 eine weitere Bestückung des Moduls 10, 10a mit elektronischen Bauelementen erfolgen. Diese Bestückung umfasst insbesondere auch eine Kontaktierung der Struktur 34 bzw. der Detektionsfolie 54 mit den Auswerte-ICs 36, 38, falls dies nicht bereits erfolgt ist. Anschließend erfolgt in einem vierten Schritt 204 das bereichsweise Ummolden der Trägerfolie 12 mit der Moldmasse 46, wie dies im Zusammenhang mit dem Werkzeug 100 bereits oben erläutert wurde. Wesentlich dabei ist, dass der Erfassungsbereich 32, 32a frei von Moldmasse 46 ist. Anschließend kann in einem fünften Schritt 205 eine weitere Bestückung von Bauteilen an dem Modul 10, 10a erfolgen.

Das soweit beschriebene Modul 10a kann in vielfältiger Art und Weise abgewandelt bzw. modifiziert werden, ohne ohne von der in den Ansprüchen definierten Idee der Erfindung abzuweichen. So ist es beispielsweise denkbar, das Verbinden der Detektionsfolie 54 mit der Trägerfolie 12 zeitgleich oder vor dem Ausbilden der elektrisch leitfähigen Strukturen 18 vorzusehen. Weiterhin wird erwähnt, dass die vorliegende Erfindung anhand eines Drucksensors 30a erläutert wurde. Die Erfindung soll jedoch auch für andere Sensoren Anwendung finden, bei denen es erforderlich ist, eine Deformation einer (elastischen) Membran bzw. eines elastisch deformierbaren Erfassungsbereichs 32, 32a zu erfassen. Beispielhaft sei ein Durchflusssensor genannt.

## Patentansprüche

1. Elektronisches Modul (10; 10a), mit einer Trägerfolie (12), wobei auf der Trägerfolie (12) wenigstens eine elektrisch leitfähige Struktur (18) und mit der elektrisch leitfähigen Struktur (18) verbundene elektronische Bauelemente (26, 28) als Bestandteil einer elektronischen Schaltung (14) angeordnet sind, wobei die elektronische Schaltung (14) mit einem Sensor, insbesondere einem Drucksensor (30; 30a) verbunden ist, und wobei die Trägerfolie (12) an einer Oberseite (16) oder Unterseite (24) zumindest bereichsweise von einer Schutzmasse (45) überdeckt ist,
wobei der Sensor, insbesondere der Drucksensor (30; 30a) einen elastisch deformierbaren Erfassungsbereich (32; 32a) aufweist, **dadurch gekennzeichnet, dass** der Erfassungsbereich (32,32a) durch einen Teilbereich der Trägerfolie (12) und zusätzlich durch eine mit der Trägerfolie (12) verbundene Detektionsfolie (54) mit einer Mikrostrukturierung gebildet ist, wobei die Detektionsfolie (54) aus Silizium besteht, um eine gegen mechanische Belastungen und Medien geschützte Kontaktierung der Detektionsfolie (54) zu erzielen,
dass Mittel zur Erfassung der Deformation des Erfassungsbereichs (32; 32a) vorgesehen sind, und dass die Schutzmasse (45) oder ein Fixierkörper eine Aussparung (48) aufweist, innerhalb der die Trägerfolie (12) und die Detektionsfolie (54) freigelegt ist, wobei die Aussparung (48) den Erfassungsbereichs (32; 32a) randseitig begrenzt, sodass die Schutzmasse (45) oder der Fixierkörper den Erfassungsbereich (32; 32a) gegenüber der Trägerfolie (12) fixiert, wobei die Wand der Aussparung (48) leicht schräg verläuft, sodass sich der Durchmesser der Aussparung (48) mit wachsendem Abstand von der Trägerfolie vergrößert.

2. Elektronisches Modul nach Anspruch 1,
**dadurch gekennzeichnet,**
**dass** die Mittel zur Erfassung der Deformation des Erfassungsbereichs (32; 32a) durch die Detektionsfolie (54) gebildet sind, insbesondere derart, dass sich ein elektrischer Widerstand der Detektionsfolie (54) in Abhängigkeit der Deformation des Erfassungsbereichs (32; 32a) ändert.

3. Elektronisches Modul nach einem der Ansprüche 1 oder 2,
**dadurch gekennzeichnet,**
**dass** die Trägerfolie (12) auf der dem Erfassungsbereich (32) gegenüberliegenden Seite einen mit dem Erfassungsbereich (32) ausgerichteten zusätzlichen Erfassungsbereich (42) aufweist, wobei die Größe des zusätzlichen Erfassungsbereichs (42) maximal der Größe des Erfassungsbereichs (32) entspricht.

4. Elektronisches Modul nach Anspruch 3,
**dadurch gekennzeichnet,**
**dass** die Seite der Trägerfolie (12), auf der sich der weitere Erfassungsbereich (42) befindet, frei von Schutzmasse (45) ist.

5. Elektronisches Modul nach einem der Ansprüche 1 bis 4,
**dadurch gekennzeichnet,**
**dass** die Detektionsfolie (54) mittels Drahtbondverbindungen (56, 58) mit der elektrisch leitfähigen Struktur (18) der Trägerfolie (12) elektrisch verbunden ist, und das der Bereich der Drahtbondverbindungen (56, 58) von der Schutzmasse (45) überdeckt ist.

6. Elektronisches Modul nach einem der Ansprüche 1 bis 5,
**dadurch gekennzeichnet,**
**dass** die Mittel zur Erfassung der Deformation des Erfassungsbereichs (32; 32a) eine Auswerteelektronik (36, 38) umfasst, die von der Schutzmasse (45) überdeckt ist.

7. Elektronisches Modul nach einem der Ansprüche 1 bis 6,
**dadurch gekennzeichnet,**
**dass** die Schutzmasse (45) durch eine Moldmasse (46) gebildet ist.

8. Verfahren zum Herstellen eines elektronischen Moduls (10; 10a), das nach einem der Ansprüche 1 bis 7 ausgebildet ist, umfassend zumindest folgende Schritte:
- Bereitstellen einer wenigstens eine elektrisch leitfähige Struktur (18) aufweisenden Trägerfolie (12)
- Verbinden einer eine Deformation eines Erfassungsbereichs (32a) der Trägerfolie (12) erfassenden Detektionsfolie (54) mit der Trägerfolie (12)
- zumindest teilweises Ausbilden einer elektronischen Schaltung (14) durch Bestücken der elektrisch leitfähigen Struktur (18) mit elektronischen Bauelementen
- Teilweises Überdecken der Trägerfolie (12) mit einer Schutzmasse (45) oder Anbringen eines Fixierkörpers an der Trägerfolie (12) unter Freilassung des Erfassungsbereichs (32; 32a)
- Ggf. Bestückung der Trägerfolie (12) in Bereichen, in denen keine Schutzmasse (45) angeordnet ist

9. Verfahren nach Anspruch 8,
**dadurch gekennzeichnet,**
**dass** die Detektionsfolie (54) mit der elektrisch leitfähigen Struktur (18) mittels Drahtbondverbindungen (56, 58) vor dem Überdecken der Trägerfolie (12) mit der Schutzmasse 845) verbunden wird, und dass die Drahtbondverbindungen (56, 58) von der Schutzmasse (45) überdeckt werden.

## Claims

1. Electronic module (10; 10a), comprising a carrier film (12), wherein at least one electrically conductive structure (18) and electronic components (26, 28) connected to the electrically conductive structure (18) as part of an electronic circuit (14) are arranged on the carrier film (12), wherein the electronic circuit (14) is connected to a sensor, in particular a pressure sensor (30; 30a), and wherein the carrier film (12) is at least regionally covered by a protective compound (45) at a top side (16) or an underside (24),
wherein the sensor, in particular the pressure sensor (30; 30a), has an elastically deformable sensing region (32; 32a), **characterized in that** the sensing region (32, 32a) is formed by a partial region of the carrier film (12) and additionally by a detection film (54) connected to the carrier film (12) and having a micro-structuring, wherein the detection film (54) consists of
silicon, in order to achieve a contacting of the detection film (54) that is protected against mechanical loads and media, **in that** means for sensing the deformation of the sensing region (32; 32a) are provided, and **in that** the protective compound (45) or a fixing body has a cutout (48) within which the carrier film (12) and the detection film (54) are exposed, wherein the cutout (48) marginally delimits the sensing region (32; 32a), such that the protective compound (45) or the fixing body fixes the sensing region (32; 32a) with respect to the carrier film (12), wherein the wall of the cutout (48) extends slightly obliquely, such that the diameter of the cutout (48) increases with increasing distance from the carrier film.

2. Electronic module according to Claim 1,
**characterized**
**in that** the means for sensing the deformation of the sensing region (32; 32a) are formed by the detection film (54), in particular in such a way that an electrical resistance of the detection film (54) changes depending on the deformation of the sensing region (32; 32a).

3. Electronic module according to either of Claims 1 and 2,
**characterized**
**in that** the carrier film (12) has on the opposite side relative to the sensing region (32) an additional sensing region (42) aligned with the sensing region (32), wherein the size of the additional sensing region (42) corresponds at most to the size of the sensing region (32).

4. Electronic module according to Claim 3,
**characterized**
**in that** the side of the carrier film (12) on which the further sensing region (42) is situated is free of protective compound (45).

5. Electronic module according to any of Claims 1 to 4,
**characterized**
**in that** the detection film (54) is electrically connected to the electrically conductive structure (18) of the carrier film (12) by means of wire bonding connections (56, 58), and in that the region of the wire bonding connections (56, 58) is covered by the protective compound (45).

6. Electronic module according to any of Claims 1 to 5,
**characterized**
**in that** the means for sensing the deformation of the sensing region (32; 32a) comprise evaluation electronics (36, 38), covered by the protective compound (45).

7. Electronic module according to any of Claims 1 to 6,
**characterized**
**in that** the protective compound (45) is formed by a mold compound (46).

8. Method for producing an electronic module (10; 10a) configured according to any of Claims 1 to 7, comprising at least the following steps:
- providing a carrier film (12) having at least one electrically conductive structure (18)
- connecting to the carrier film (12) a detection film (54) that senses a deformation of a sensing region (32a) of the carrier film (12)
- at least partially forming an electronic circuit (14) by equipping the electrically conductive structure (18) with electronic components
- partially covering the carrier film (12) with a protective compound (45) or attaching a fixing body to the carrier film (12) while leaving the sensing region (32; 32a) free
- optionally equipping the carrier film (12) in regions in which no protective compound (45) is arranged.

9. Method according to Claim 8,
**characterized**
**in that** the detection film (54) is connected to the electrically conductive structure (18) by means of wire bonding connections (56, 58) before the process of covering the carrier film (12) with the protective compound (45), and in that the wire bonding connections (56, 58) are covered by the protective compound (45).

## Revendications

1. Module électronique (10 ; 10a), comprenant un film porteur (12), dans lequel au moins une structure électriquement conductrice (18) et des composants électroniques (26, 28) reliés à la structure électriquement conductrice (18) sont disposés sur le film porteur (12) en faisant partie d'un circuit électronique (14), dans lequel le circuit électronique (14) est relié à un capteur, en particulier à un capteur de pression (30 ; 30a), et dans lequel le film porteur (12) est recouvert au moins par endroits d'une masse de protection (45) sur une face supérieure (16) ou une face inférieure (24),
dans lequel le capteur, en particulier le capteur de pression (30 ; 30a) présente une zone de détection (32 ; 32a) déformable élastiquement, **caractérisé en ce que** la zone de détection (32, 32a) est formée par une zone partielle du film porteur (12) et de plus par un film de détection (54), relié au film porteur (12), avec une microstructuration, dans lequel le film de détection (54) est
composé de silicium pour obtenir une mise en contact du film de détection (54), protégée contre des contraintes mécaniques et des milieux, **en ce que** des moyens pour détecter la déformation de la zone de détection (32 ; 32a) sont prévus, et **en ce que** la masse de protection (45) ou un corps de fixation présente un évidement (48) à l'intérieur duquel le film porteur (12) et le film de détection (54) sont exposés, dans lequel l'évidement (48) délimite sur le bord la zone de détection (32 ; 32a) de sorte que la masse de protection (45) ou le corps de fixation fixe la zone de détection (32 ; 32a) par rapport au film porteur (12), dans lequel la paroi de l'évidement (48) s'étend légèrement en biais de sorte que le diamètre de l'évidement (48) augmente avec une distance croissante du film porteur.

2. Module électronique selon la revendication 1,
**caractérisé**
**en ce que** les moyens de détection de la déformation de la zone de détection (32 ; 32a) sont formés par le film de détection (54), en particulier de telle sorte qu'une résistance électrique du film de détection (54) change en fonction de la déformation de la zone de détection (32 ; 32a).

3. Module électronique selon l'une quelconque des revendications 1 ou 2,
**caractérisé**
**en ce que** le film porteur (12) présente sur la face opposée à la zone de détection (32) une zone de détection supplémentaire (42) alignée sur la zone de détection (32), dans lequel la taille de la zone de détection supplémentaire (42) correspond au maximum à la taille de la zone de détection (32).

4. Module électronique selon la revendication 3,
**caractérisé**
**en ce que** la face du film porteur (12) sur laquelle se trouve la zone de détection supplémentaire (42) est exempte de la masse de protection (45).

5. Module électronique selon l'une quelconque des revendications 1 à 4,
**caractérisé**
**en ce que** le film de détection (54) est relié électriquement au moyen de liaisons filaires soudées (56, 58) à la structure électriquement conductrice (18) du film porteur (12) et la zone des liaisons filaires soudées (56, 58) est recouverte de la masse de protection (45).

6. Module électronique selon l'une quelconque des revendications 1 à 5,
**caractérisé**
**en ce que** les moyens de détection de la déformation de la zone de détection (32 ; 32a) comprennent une électronique d'évaluation (36, 38) qui est recouverte de la masse de protection (45).

7. Module électronique selon l'une quelconque des revendications 1 à 6,
**caractérisé**
**en ce que** la masse de protection (45) est formée par une masse moulée (46).

8. Procédé permettant de fabriquer un module électronique (10 ; 10a) qui est réalisé selon l'une quelconque des revendications 1 à 7, comprenant au moins les étapes suivantes consistant à :
- fournir un film porteur (12) présentant au moins une structure électriquement conductrice (18),
- relier au film porteur (12) un film de détection (54) détectant une déformation d'une zone de détection (32a) du film porteur (12),
- réaliser au moins partiellement un circuit électronique (14) en équipant la structure électriquement conductrice (18) de composants électroniques,
- recouvrir partiellement le film porteur (12) d'une masse de protection (45) ou appliquer un corps de fixation au film porteur (12) en dégageant la zone de détection (32 ; 32a),
- le cas échéant équiper le film porteur (12) dans des zones où aucune masse de protection (45) n'est disposée.

9. Procédé selon la revendication 8,
**caractérisé**
**en ce que** le film de détection (54) est relié à la structure électriquement conductrice (18) au moyen de liaisons filaires soudées (56, 58) avant le recouvrement du film porteur (12) avec la masse de protection (45), et **en ce que** les liaisons filaires soudées (56, 68) sont recouvertes de la masse de protection (45).
